Europäisches Patentamt

European Patent Office

Office européen des brevets

(11) Publication number: **0 373 559 B1**

## EUROPEAN PATENT SPECIFICATION

(45) Date of publication of patent specification: **13.07.94**

(51) Int. Cl.5: **C08J 3/12**, C08J 9/02, B29B 9/00, //(B29B9/00,9:06), C08L83:04

(21) Application number: **89122841.3**

(22) Date of filing: **11.12.89**

(54) **Spherical, cellular silicone rubber microparticles and method for their preparation.**

(30) Priority: **12.12.88 JP 311991/88**

(43) Date of publication of application: **20.06.90 Bulletin 90/25**

(45) Publication of the grant of the patent: **13.07.94 Bulletin 94/28**

(84) Designated Contracting States: **BE DE FR GB**

(56) References cited:
**EP-A- 0 242 219**
**FR-A- 2 232 574**

(73) Proprietor: **Dow Corning Toray Silicone Company Ltd.**
**3-16, Nihombashi-muromachi 2-chome, Chuo-ku**
**Tokyo 103(JP)**

(72) Inventor: **Shimizu, Koji**
**25-14, 4-chome**
**Aobadai**
**Ichihara Chiba(JP)**
Inventor: **Hamada, Mitsuo**
**5-17, 3-chome, Ohkubo**
**Kisarazu-shi Ichihara Chiba(JP)**

(74) Representative: **Spott, Gottfried, Dr. et al**
**Patentanwälte Spott und Puschmann**
**Sendlinger-Tor-Platz 11**
**D-80336 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3. 10/3.09/3.3.3)

**Description**

The present invention relates to spherical, cellular silicone rubber microparticles.

Silicone rubber moldings have a number of excellent properties, such as heat resistance, hydrophobicity, cold resistance, chemical resistance, electrical insulation, and as a consequence have been produced in many configurations (sheet or block moldings, fibrous or strand moldings, cylindrical moldings, powders and granules,) and have been used in a large number of applications.

However, cellular silicone rubber moldings differ from cellular moldings based on polyolefin or polyurethane resins in that they have cells with a nonuniform size and distribution. Moreover, they have a small expansion ratio, and it is difficult to manufacture high-quality cellular moldings with good reproducability. As a consequence of these problems, cellular silicone rubber moldings are basically not prepared in forms other than sheet or block moldings. In particular, a spherical, microparticulate configuration is completely unknown in this regard.

Silicone microparticles are disclosed in U.S. Pat. No. 4,370,160, issued Jan. 25, 1983, as being prepared by a process of irradiating a liquid organopolysiloxane, convertible by ultraviolet radiation to the solid state, which is dispersed as discrete entities in a fluid continuous phase.

Shimizu et al. describe a method for preparing a cured silicone rubber powder in the form of microfine particles in U.S. Pat. No. 4,742,142, issued May 3, 1988. The method emulsifies a curable liquid silicone rubber composition in a mixture comprising water and a surfactant, then disperses the resultant emulsion into hotter water, then isolates the resultant cured powder. Yoshida et al. describe a similar method in U.S. Pat. No. 4,743,670, issued May 10. 1988, which does not contain a surfactant. FR-A 2 232 574 discloses porous silicone rubber particles having an average particle size of 0,1 to 1 mm. These particles have been obtained by a condensation reaction. The available crosslink density of the particles is not high enough. EP-A 0 242 219 discloses a method for producing silicone rubber powder wherein a liquid silicone rubber composition is dispersed as a discontinuous phase and the dispersion is then contacted with liquid residing at a temperature higher than the water of the dispersion to induce curing of said liquid silicone rubber composition. There is no teaching or possibility of producing a foamed particle according to this process.

The object of the present invention is to provide a cellular silicone rubber microparticle which is spherical in form, which has a high expansion ratio, and whose contained cells have a highly uniform size and distribution.

Figure 1 of the drawing is a schematic cross section of one embodiment of the cellular silicone rubber microparticle of the present invention.

Figure 2 is a cross section of one example of a colloid mill which may be used in the production of the cellular silicone rubber microparticle of the present invention.

Figure 3(a) is a cross section of one example of a device which may be used in the production of a water-based dispersion of a foamable liquid silicone rubber composition.

Figure 3(b) is the II-II cross section from Figure 3(a).

This invention relates to spherical, cellular silicone rubber microparticles having internal microcells, an apparent specific gravity in the range of 0.05 $g/cm^3$ to 0.5 $g/cm^3$, and an average particle size of 10 micrometers to 5,000 micrometers.

This invention also relates to a method for the preparation of spherical, cellular silicone rubber microparticles, said method being characterized by the dispersion in water of a foamable liquid silicone rubber composition comprising an addition curing silicone rubber composition and a foam generating component comprising an organopolysiloxane having at least 2 silicone-bonded hydroxyl groups in each molecule, an organohydrogenpolysiloxane having at least 2 silicone-bonded hydrogen atoms in each molecule and a platinum type catalyst, to give a dispersion wherein said foamable liquid silicone rubber composition is dispersed as a discontinuous phase, wherein the concentration of the foamable liquid silicone rubber composition in the waterbased dispersion is 5 to 70 weight percent, and by then contacting this dispersion with a liquid residing at a temperature higher than the aforesaid water in order simultaneously to induce curing and foaming of said foamable liquid silicone rubber composition.

The cellular silicone rubber microparticle of the present invention is a microparticle which manifests a good absorption not only for gas, but also for liquids (as demonstrated by the quantity of oil absorption), and which has an apparent specific gravity within the range of 0.05 to 0.5 $g/cm^3$, an average particle size of 10 micrometers to 5,000 micrometers, and a spherical shape. By itself or in combination with various forms of already available materials, it manifests the properties of a foam (thermal insulation, acoustic insulation, light weight,) while retaining the properties of a silicone rubber (lubrication, water repellency, release, tack inhibition, heat resistance,).

The aforesaid object of the present invention is accomplished by means of a spherical, cellular silicone rubber microparticle having internal microcells, an apparent specific gravity in the range of

0.05 g/cm$^3$ to 0.5 g/cm$^3$, and an average particle size of 10 micrometers to 5,000 micrometers.

A particular feature of the spherical, cellular silicone rubber microparticle of the present invention is that it is a spherical microparticle. Being a spherical microparticle, its manipulation and handling are strongly advantaged. For example, when this spherical, cellular silicone rubber microparticle is mixed with any of various binders for the purpose of molding a cellular product having a complex shape, one observes an even and uniform filling of the mold or die, which makes possible the accurate molding of the fine details of complex products. In addition, because it is a microparticle, it can be easily and uniformly mixed into various types of synthetic resins.

The apparent specific gravity of the spherical, cellular silicone rubber microparticle of the present invention must fall within the range of 0.05 g/cm$^3$ to 0.5 g/cm$^3$.

The apparent density as used herein is the value afforded by the following measurement method. The cellular silicone rubber particles are loosely filled into a 500 cm$^3$ (500 cc) container, the weight is then measured, and the apparent specific gravity is calculated from the following formula:
apparent specific gravity (g/cm$^3$) equal (weight of 500 cm$^3$ cellular particles)/500 cm$^3$

When this apparent specific gravity value exceeds 0.5 g/cm$^3$, the properties of a cellular product, for example, properties inherent to a foamed or cellular product such as light weight, thermal insulation, acoustic insulation, vibration resistance, and the like, are not obtained. On the other hand, when this apparent specific gravity falls below 0.05 g/cm$^3$, the cellular structure, i.e., the porous structure, is adversely affected, and it becomes difficult to prepare spherical, cellular silicone rubber microparticles having a prescribed expansion ratio and a good mechanical strength.

The average particle size of the cellular microparticle of the present invention must fall within the range of 10 micrometers to 5,000 micrometers, and preferably falls within the range of 30 micrometers to 1,000 micrometers. When the average particle size of the cellular microparticle falls below 10 micrometers, the quantity of interior microcells becomes small and the expansion ratio assumes small values (the apparent specific gravity becomes large), which makes it very difficult to obtain a spherical, cellular silicone rubber microparticle adequately endowed with the properties of a foam. When the average particle size exceeds 5,000 micrometers, the size of the internally formed cells becomes nonuniform, and the preparation of spherical, cellular silicone rubber microparticles having good mechanical properties and a uniform cell size and distribution becomes difficult.

Furthermore, while the size of the cells contained within the aforesaid spherical, cellular silicone rubber microparticle will vary with the average particle size of the cellular microparticle, their average size should be no greater than 300 micrometers and preferably falls with the range of 5 to 200 micrometers.

A characteristic feature of the cellular microparticle of the present invention is its spherical form.

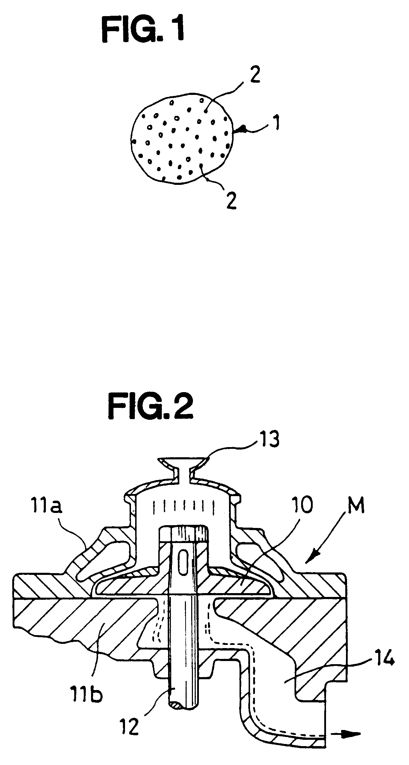

In this regard, spherical generally denotes a round shape such as circular, elliptical, and the like. Moreover, as demonstrated in Figure 1, the spherical, cellular silicone rubber microparticle 1 of the present invention contains a large number of microcells 2 in its interior. This spherical, cellular silicone rubber microparticle 1 of the present invention containing numerous microcells 2 is preferably a primary particle, but it may also be an aggregated particle comprising a plural number of the aforesaid primary particles, typically no more than 10.

An advantageous method for producing the spherical, cellular silicone rubber microparticle of the present invention proceeds as follows: a foamable liquid silicone rubber composition is dispersed in water to give a dispersion in which the foamable liquid silicone rubber composition is dispersed as a discontinuous phase; and this dispersion is then brought into contact with a liquid residing at a temperature above that of the water in the dispersion in order to bring about foaming and curing of the foamable liquid silicone rubber composition.

The present invention's method for the preparation of spherical, cellular silicone rubber microparticles is described in the following.

First, a foamable liquid silicone rubber composition is placed together with water in a stirrer/mixer such as a colloid mill, homogenizer, static mixer (stationary mixer), and a water-based dispersion of the foamable liquid silicone rubber composition is prepared by dispersing it to homogeneity in the water while at the same time converting the foamable liquid silicone rubber composition into a very finely divided form. This water-based dispersion is subsequently introduced into a liquid hotter than the dispersion's water, for example, into a hot-water bath, and the foamable liquid silicone rubber composition is then simultaneously cured and foamed to afford spherical, cellular silicone rubber microparticles.

No specific restriction is placed on the liquid which brings about foaming and curing of the foamable liquid silicone rubber composition dispersed as a discontinuous phase in water. However, liquids which inhibit the curing of foamable liquid silicone rubber compositions and good solvents for the foamable liquid silicone rubber composition should be avoided. This liquid for inducing the foaming/curing of the foamable liquid silicone rubber composition is concretely exemplified by water and the various fluid compounds used as thermal media, as typified by liquid paraffins, waxes, dimethylsilicone oils, phthalate esters. However, water is preferred for its high heat capacity, ease of handling, and low cost.

An important consideration in the above-described method of preparation according to the present invention is that the concentration of foamable liquid silicone rubber composition in the water-based dispersion should be 5 to 70 weight percent and preferably is 10 to 50 weight percent. The cellular microparticle productivity declines at concentrations below 5 weight percent, while the cellular microparticles tend not to be formed as single, discrete particles at concentrations exceeding 70 weight percent.

One embodiment of the present invention's method for the preparation of cellular microparticles, which uses a colloid mill, is explained below.

This colloid mill is essentially a device which mechanically grinds and microparticulates a solid material (refer to Kagaku Dai-Jiten, pp. 740 to 741, published by Kyoritsu Shuppan Kabushiki Kaisha, 10 September 1967). A variety of such devices are available, and any of these may be used in the present invention.

Figure 2 contains a partial cross section of one example of a colloid mill for the preparation of a water-based dispersion of a foamable liquid silicone rubber composition according to the invention. In this figure, the colloid mill $M$ has an interior rotor $10$ which is surrounded by upper and lower stators $11a$ and $11b$ on the outside. The rotor $10$ is fixed on a vertical rotating axle $12$, which can be rotated at 1,000 to 20,000 rpm by a drive source (not shown in the drawing). A narrow gap in the range of 0.020 mm to 0.100 mm is formed between rotor $10$ and stators $11a$ and $11b$, and narrow grooves are formed by their opposing surfaces. An inlet $13$, through which foamable liquid silicone rubber composition is supplied, is present in upper stator $11a$, and an outlet $14$, through which the water-based dispersion of foamable liquid silicone rubber composition is discharged after micropulverization, in present in lower stator $11b$. The aforesaid foamable liquid silicone rubber composition is ground and micropulverized together with water on the gap between rotor $10$ and stators $11a$, $11b$ in colloid mill $M$ to form a water-based dispersion of the foamable liquid silicone rubber composition.

It is crucial in this regard that the foamable liquid silicone rubber composition undergo foaming and curing only upon its introduction into hot water in the subsequent step, and that it retain its liquid state certainly during and even after formation of the water-based dispersion. A spherical, cellular silicone rubber microparticle having a large number of microcells is not formed in the event of foaming or curing prior to introduction into the hot water.

The water-based dispersion of particulated, foamable liquid silicone rubber composition prepared as described above is then dripped into a hot-water bath in order to carry out foaming and curing in the hot water simultaneously.

In an even more preferred method for preparing spherical, cellular silicone rubber microparticles according to the present invention, threads or strands of the foamable liquid silicone rubber composition are ejected or extruded downward from a large number of pores, and these are then supplied together with water to a colloid mill as described above. The liquid silicone rubber composition is then microparticulated by the colloid mill to afford the water-based dispersion.

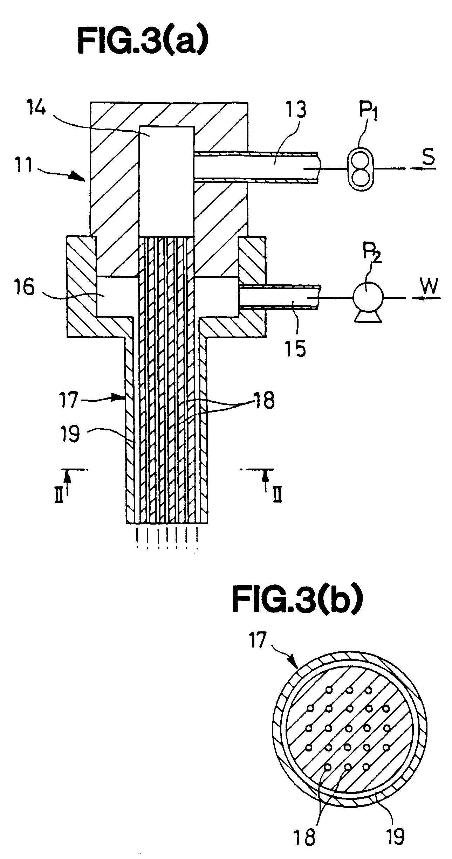

Figures 3(a) and (b) contain cross sections of one example of a device for the preparation of a water-based dispersion by the micropulverization of a foamable liquid silicone rubber composition. In Figure 3(a), distributor $11$ has in its upper zone both a distribution chamber $14$ for foamable liquid silicone rubber composition $S$ (this chamber is connected to a feed line $13$ for the foamable liquid silicone rubber composition $S$) and a water distribution chamber $16$ (connected to a feed line $15$ for water $W$). In its lower zone it presents a discharge base $17$. $P_1$ is a gear pump for the pressure delivery of foamable liquid silicone rubber composition $S$, and $P_2$ is a pump for the pressure delivery of water $W$. Figure 3(b), the II-II cross section from Figure 3(a), shows a large number of small holes $18$ in the center of the discharge base $17$. These holes have a uniform diameter and run from the aforementioned distribution chamber $14$ for foamable liquid silicone rubber composition $S$ to the bottom or terminal surface. An annular slit $19$, running from the aforementioned water distribution chamber $16$ to the bottom surface and capable of discharging a water $W$ film, is installed so as to encircle or surround the pores or holes $18$ which discharge threads or strands of the foamable liquid silicone rubber composition $S$.

According to this, threads or strands of foamable liquid silicone rubber composition $S$ are discharged from the holes $18$ in the discharge base $17$ and flow downward into the aforementioned colloid mill $M$ while surrounded along their circumference by a water $W$ film discharged from the annular slit $19$. The product is a water-based dispersion of the foamable liquid silicone rubber composition. In this method of production, the foamable liquid silicone rubber composition is first converted into threads or strands and is then introduced together with water into the colloid mill. This conversion into a thread-like or strand-like foamable liquid silicone rubber composition facilitates and supports grinding and micropulverization by the mill into microparticles with uniform diameters.

The mixing proportion between the water and foamable liquid silicone rubber composition should be 40 to 2,000 parts water per 100 parts foamable liquid silicone rubber composition as discussed above in order to obtain a concentration of 5 to 7 weight percent by the foamable liquid silicone rubber composition.

Furthermore, it is preferred that surfactant be added to the water-based dispersion of foamable liquid silicone rubber composition. A uniform micropulverization and uniform particle diameter on the part of the foamable liquid silicone rubber composition are facilitated by the addition of a surfactant, which effectively inhibits aggregation and destruction of the microparticles in the water-based dispersion of the micropulverized foamable liquid silicone rubber composition.

Surfactants in this regard are exemplified by anionic surfactants such as the salts of higher fatty acids, the sulfate esters of higher alcohols; cationic surfactants such as quaternary ammonium salts; and nonionic surfactants such as polyoxyethylene alkylphenyl ethers, sorbitan fatty acid esters, polyoxyalkylene fatty acid esters, polyoxyethylene/polyoxypropylenes, fatty acid monoglycerides. These may be used singly or in combinations of two or more.

The foamable liquid silicone rubber composition used by the present invention comprises the mixture of a foam-generating component and an addition curing silicone rubber composition wherein the silicone rubber composition is a liquid or paste at room temperature having reactive group-containing liquid organopolysiloxane and crosslinker and/or curing catalyst as its principal components. This foamable liquid silicone rubber composition should afford a rubbery elastic foam upon curing by heating or standing at room temperature.

The silicone rubber composition in the foamable liquid silicone rubber composition is an addition-curing silicone rubber composition, However, addition curing silicone rubber compositions are preferred for their rapid curing reaction rates and excellent curing uniformity.

A composition with the following essential components is provided as an example of an addition-curing silicone rubber composition:
(A) organopolysiloxane having at least 2 lower alkenyl groups in each molecule,
(B) organopolysiloxane having at least 2 silicon-bonded hydrogen atoms in each molecule, and
(C) a platinum-type compound as catalyst.

Component (A) is the principal or main component of the silicone rubber-generating organopolysiloxane, and curing proceeds by the addition reaction of this component with component (B) under the action of the platinum-type compound catalyst.

Examples of component (A) are as follows: dimethylvinylsiloxy-terminated methylvinylpolysiloxanes, dimethylvinylsiloxy-terminated methylvinylsiloxane-dimethylsiloxane copolymers, dimethylvinylsiloxy-terminated dimethylsiloxane-methylphenylsiloxane copolymers, dimethylvinylsiloxy-terminated dimethylsiloxane-diphenylsiloxane-methylvinylsiloxane copolymers, trimethylsiloxy-terminated dimethylsiloxane-methylvinylsiloxane copolymers, trimethylsiloxy-terminated dimethylsiloxane-methylphenylsiloxane-methylvinylsiloxane copolymers, dimethylvinylsiloxy-terminated methyl (3,3,3-trifluoropropyl)polysiloxanes, dimethylvinylsiloxy-terminated dimethylsiloxane-methyl(3,3,3-trifluoropropyl)siloxane copolymers, and polysiloxanes composed of $CH_2=CH(CH_3)_{1/2}$ units, $(CH_3)_3SiO_{1/2}$ units, and $SiO_{4/2}$ units.

This component (A) preferably has a viscosity of at least 100 centipoise at 25 degrees Centigrade.

Component (B) is a cross linker for component (A) and functions to bring about curing of the liquid silicone rubber composition through an addition reaction, under the action of the catalyst, between the silicon atoms in component (B) and the lower alkenyl groups (such as vinyl, allyl, propenyl,) in component (A).

Component (B) is exemplified as follows: trimethylsiloxy-terminated methylhydrogenpolysiloxanes, trimethylsiloxy-terminated dimethylsiloxane-methylhydrogensiloxane copolymers, methylhydrogensiloxy-terminated dimethylsiloxane-methylhydrogensiloxane copolymers, dimethylsiloxane-methylhydrogensiloxane cyclic copolymers, copolymers composed of $(CH_3)_2HSiO_{1/2}$ units and $SiO_{4/2}$ units, and copolymers composed of $(CH_3)_3SiO_{1/2}$ units, $(CH_3)_2HSiO_{1/2}$ units, and $SiO_{4/2}$ units.

From the standpoint of miscibility with component (A), component (B) should have a viscosity in the range of 1 to 50,000 centipoise at 25 degrees Centigrade.

Component (B) is preferably present in a quantity which provides values of (0.5 : 1) to (20 : 1) for the molar ratio between the total quantity of silicon-bonded hydrogen atoms in component (B) and the total quantity of all lower alkenyl groups in component (A). A good curability will not appear when this ratio is less than (0.5 : 1), while the curing rate is too rapid when this ratio exceeds (20 : 1) and handling is thus made difficult.

Any platinum-type catalyst may be used which induces and promotes the addition reaction between the aforesaid components (A) and (B), and no specific restriction applies here. However, examples are platinum black or platinum supported on a carrier, chloroplatinic acid, chloroplatinic acid dissolved in an alcohol or ketone, and complexes between chloroplatinic acid and olefins, alkenylsiloxanes, diketones.

The foamable liquid silicone rubber composition used by the present invention comprises the mixture of a foam-generating component and a liquid silicone rubber composition as described above. No specific restriction applies to this foam-generating component as long as it can impart a foaming capacity to the liquid silicone rubber composition so as ultimately to give cellular microparticles.

The following composition is used in the method of the present invention and is a particularly effective foam-generating component for use in the above-described addition-curing silicone rubber composition:

(a) organopolysiloxane having at least 2 silicon-bonded hydroxyl groups in each molecule,
(b) organohydrogenpolysiloxane having at least 2 silicon-bonded hydrogen atoms in each molecule, and
(c) a platinum-type compound catalyst.

The organopolysiloxane of component (a) is exemplified by hydroxyl-terminated dimethylpolysiloxanes, hydroxyl-terminated dimethylsiloxane-methylphenylsiloxane copolymers, and hydroxyl-terminated dimethylsiloxane-methylvinylsiloxane copolymers.

The organopolysiloxane of this foam-generating component can be synthesized, for example, by the ring-opening polymerization of organosiloxane cyclics; by the hydrolysis of linear or branched organopolysiloxane possessing hydrolyzable groups such as alkoxy, acyloxy; or by the hydrolysis of one or more species of diorganohalosilanes. The organohydrogenpolysiloxane comprising component (b) and the platinum-type compound comprising component (c) are respectively exemplified by the aforementioned organohydrogenpolysiloxane of component (B) and the platinum-type compound catalyst of component (C).

Typical blowing agents are exemplified by the known azobisisobutyronitrile, azodicarbonamide, dinitrosopentamethylenetetramine.

In order for the aforesaid foamable liquid silicone rubber composition to yield a spherical, cellular silicone rubber microparticle having a uniform size and shape, a small apparent specific gravity, and a large expansion ratio, it is crucial within the context of the present invention that the foamable liquid silicone rubber composition remain liquid prior to introduction into the hot-water bath and that foaming/curing occur for the first time only upon its contact with the hot water. Accordingly, in the case of an advance or preliminary blending of the components constituting the foamable liquid silicone rubber composition, the foam-generating component, the foamable liquid silicone rubber composition should be cooled to and maintained at a temperature at which the curing reaction does not occur, for example, low temperatures on the level of minus 20 to plus 10 degrees Centigrade.

Within the context of the present invention, the foamable liquid silicone rubber composition as described above must be cured in the hot-water bath as rapidly as possible. In consequence of this, it becomes desirable to omit the addition of additives which would inhibit curing of the aforementioned foamable liquid silicone rubber composition, for example, acetylenic compounds, hydrazines, triazoles, phosphines, mercaptans.

The following may also be added in order, inter alia, to adjust the fluidity of the foamable liquid silicone rubber composition or in order to improve the strength of the spherical, cellular silicone rubber microparticles: reinforcing fillers such as precipitated silica, fumed silica, calcined silica, fumed titanium oxide; quartz powder, diatomaceous earth, aluminosilicic acid, iron oxide, zinc oxide, calcium carbonate, colorants.

The utilization and development of the above-described spherical, cellular silicone rubber microparticles of the present invention can be contemplated for a number of fields because they are constituted of silicone rubber while at the same time possessing properties intrinsic to foams such as light weight, heat insulation, acoustic insulation, vibration resistance. In this regard, the spherical, cellular silicone rubber microparticles of the invention can be used by themselves in the particular application, or they may be used in combination with another, already known material. In the latter case, the spherical, cellular silicone rubber microparticles of the present invention can donate both the properties of a foam as well as the properties of a silicone rubber to the other material.

The spherical, cellular silicone rubber microparticles of the present invention may be used in such applications as solid lubricants, water repellents, release agents, tack inhibitors, greases, oils, cements, plasters, paints, casting materials, molding materials, films, agrichemicals, pharmaceuticals, but their application is not limited to the foregoing.

Already known or existing materials which can be used in combination with the spherical, cellular silicone rubber microparticles of the present invention are exemplified by various organic polymers and macromolecules such as rubbers and resins. Rubbers in this regard are exemplified by natural rubbers, polychloroprene rubbers, polybutadiene rubbers, SBR, EPR, EPT, polyisoprene rubbers, polyisobutene rubbers, polyacrylate ester rubbers, butadiene/acrylonitrile copolymer rubbers, polyester rubbers, polysulfide rubbers, fluororubbers, silicone rubbers, copolymer rubbers among the preceding, and rubber blends of two or more of the preceding. Resins in this regard are exemplified by aliphatic polyamides such as nylon-5, nylon-6, nylon-7, nylon-8, nylon-9, nylon-10, nylon-11, nylon-12, nylon 66, nylon-610; aromatic polyamides as exemplified by "Kevlar"; saturated polyesters as typified by polyethylene terephthalate, polybutylene terephthalate, poly-hydrogenated xylene terephthalate, polycaprolactone, and polypivalolactone; polycarbonates; ABS; AS; polystyrene; polyethylene, polypropylene, polybutadiene, and other polyolefin resins; polyvinyl chloride; polyvinylidene chloride; polyacrylonitrile; polyvinyl alcohol; polyvinyl butyral; polymethyl methacrylate; fluorine-containing resins; polyethers such as polyethylene glycol, polypropylene glycol, polytetrahydrofuran, Penton, polyphenylene oxide, and polyacetal; as well as by various thermoplastic and thermosetting resins and UV-, gamma-, or electron beam-curing resins, such as phenolic resins, polyurethane resins, acrylic resins, urea resins, unsaturated polyester resins, melamine resins, phthalic resins, BT resins, polyimide resins, silicone resins, celluloid, acetylcellulose, epoxy acrylate, polyacrylate salts, epoxy resins. The block and random copolymers of the preceding resins also fall into this category, as do their blends.

The present invention will be explained more concretely in the following with reference to an illustrative example. In this example, parts equal weight parts, and the viscosity is the value measured at 25 degrees Centigrade

Example

First, 100 parts dimethylvinylsiloxy-terminated dimethylpolysiloxane (viscosity equal 500 mPa.s (centipoise), vinyl group content equal 0.5 weight percent), 50 parts hydroxyl-terminated dimethylpolysiloxane (viscosity equal 10,000 mPa.s (centipoise), hydroxyl group content equal 0.07 weight percent), 10 parts hydroxyl-terminated dimethylsiloxane-methylvinylsiloxane copolymer (viscosity equal 20 mPa.s (centipoise), hydroxyl group content equal 0.07 weight percent), and 20 parts trimethylsiloxy-terminated methylhydrogenpolysiloxane (viscosity equal 5 mPa.s (centipoise), silicon-bonded hydrogen content equal 1.5 weight percent) were mixed to give a liquid mixture (A). A liquid mixture (B) was prepared by blending 0.6 parts isopropanolic chloroplatinic acid solution (platinum metal content equal 3.0 weight percent) into a mixture corresponding to a mixture (A) from which the aforementioned methylhydrogenpolysiloxane had been omitted. A liquid mixture (C) was prepared by the addition of 0.01 part nonionic surfactant (Tergitol TMN-6, trimethylnonanol/ethylene oxide adduct from Union Carbide Corporation) to 500 parts ion-exchanged water.

Mixtures (A) and (B) (pre-cooled to 10 degrees Centigrade) were mixed in a static mixer, and this was fed into a colloid mill according to Figure 2 along with mixture (C) (cooled also to 10 degrees Centigrade) to afford a water-based dispersion containing a micropulverized foamable liquid silicone rubber composition.

This water-based dispersion was then poured and uniformly dispersed into a hot-water bath maintained at 80 degrees Centigrade in order simultaneously to bring about foaming and thermosetting of the micropulverized foamable liquid silicone rubber composition. Granular, cellular silicone rubber microparticles were obtained as the product.

The obtained granular, cellular silicone rubber microparticles were removed from the hot-water bath and dried. They were then measured for their apparent specific gravity, average particle size, average internal cell diameter, and oil absorption, and the results of these measurements are reported in the Table below.

The oil absorption was measured according to JIS K-5101 (Pigment Test Methods).

For comparison, a foamable liquid silicone rubber composition was prepared as in the example with the following modifications: the 50 parts hydroxyl-terminated dimethylpolysiloxane (viscosity equal 10,000 mPa.s (centipoise), hydroxyl group content equal 0.07 weight percent) and 10 parts hydroxyl-terminated dimethylsiloxane-methylvinylsiloxane copolymer (viscosity equal 20 mPa.s (centipoise), hydroxyl group content equal 0.07 weight percent) were not used, 6 parts trimethylsiloxy-terminated methylhydrogenpolysiloxane (viscosity equal 5 mPa.s (centipoise), silicon-bonded hydrogen content equal 1.5 weight percent) was used instead of the 20 parts of this methylhydrogenpolysiloxane, and 0.3 parts of the isopropanolic chloroplatinic acid solution (platinum metal content equal 3.0 weight percent) was used in place of the 0.6 parts of this isopropanolic chloroplatinic acid solution. Cellular silicone rubber microparticles were then prepared from this foamable liquid silicone rubber composition as above. The apparent specific gravity, average particle size, average internal cell diameter, and oil absorption were measured as above, and these results are also reported in the Table.

| TABLE | Example | Comparison Example |
|---|---|---|
| apparent specific gravity | 0.1 | 0.60 |
| average particle diameter (micrometers) | 150 | 40 |
| average internal cell diameter (micrometers) | 8 | - |
| oil absorption (g/100 g) | 150 | 35 |

## Claims

1. Spherical, cellular silicone rubber microparticles having internal microcells, an apparent specific gravity in the range of 0,05 g/cm$^3$ to 0,5 g/cm$^3$, and an average particle size of 10 micrometers to 5000 micrometers obtained from a foamable liquid silicone rubber composition comprising an addition curing silicone rubber composition and a foam generating component.

2. Method for the preparation of spherical, cellular silicone rubber microparticles, said method being characterized by the dispersion in water of a foamable liquid silicone rubber composition comprising an addition curing silicone rubber composition and a foam generating component comprising an organopolysiloxane having at least 2 silicone-bonded hydroxyl groups in each molecule, an organohydrogenpolysiloxane having at least 2 silicone-bonded hydrogen atoms in each molecule and a platinum type catalyst, to give a dispersion wherein said foamable liquid silicone rubber composition is dispersed as a discontinuous phase, wherein the concentration of the foamable liquid silicone rubber composition in the waterbased dispersion is 5 to 70 weight percent, and by then contacting this dispersion with liquid residing at a temperature higher than the aforesaid water in order simultaneously to induce curing and foaming of said foamable liquid silicone rubber composition.

## Patentansprüche

1. Kugelförmige zelluläre Silikonkautschukmikroteilchen mit inneren Mikrozellen, einem scheinbaren spezifischen Gewicht im Bereich von 0,05 g/cm$^3$ bis 0,5 g/cm$^3$ und einer durchschnittlichen Teilchengröße von 10 μm bis 5.000 μm, erhalten aus einer schäumbaren flüssigen Silikonkautschukzusammensetzung, die eine durch Additionsreaktion härtende Silikonkautschukzusammensetzung und eine schaumerzeugende Komponente umfaßt.

2. Verfahren zur Herstellung von kugelförmigen zellulären Silikonkautschukmikroteilchen, wobei das Verfahren dadurch gekennzeichnet ist, daß eine schäumbare flüssige Silikonkautschukzusammensetzung, die eine durch Additionsreaktion härtende Silikonkautschukzusammensetzung und eine schaumerzeugende Komponente umfaßt, die ein Organosiloxan mit mindestens zwei siliciumgebundenen Hydroxylgruppen in jedem Molekül, ein Organohydrogenpolysiloxan mit mindestens zwei siliciumgebundenen Wasserstoffatomen in jedem Molekül und einen platinartigen Katalysator umfaßt, in Wasser dispergiert wird, was eine Dispersion ergibt, worin die schäumbare flüssige Silikonkautschukzusammensetzung als diskontinuierliche Phase dispergiert ist, wobei die Konzentration der schäumbaren flüssigen Silikonkautschukzusammensetzung in der Dispersion auf Wasserbasis 5 bis 70 Gew.-% ist, und dann diese Dispersion mit einer Flüssigkeit in Kontakt gebracht wird, die eine Temperatur aufweist, die höher ist als die des vorher angegebenen Wassers, um gleichzeitig das Härten und Schäumen der schäumbaren flüssigen Silikonkautschukzusammensetzung zu induzieren.

**Revendications**

1. Microparticules sphériques et cellulaires de caoutchouc de silicone ayant des microcellules internes, une masse spécifique apparente située dans la plage de 0,05 g/cm$^3$ à 0,5 g/cm$^3$, et une taille moyenne de particule de 10 à 5000 micromètres, obtenues à partir d'une composition de caoutchouc de silicone liquide expansible comprenant une composition de caoutchouc de silicone durcissant par addition et un composant porogène.

2. Procédé pour la préparation de microparticules sphériques et cellulaires de caoutchouc de silicone, ledit procédé étant caractérisé par la dispersion dans de l'eau d'une composition de caoutchouc de silicone liquide expansible comprenant une composition de caoutchouc de silicone durcissant par addition et un composant porogène comportant un organopolysiloxane ayant au moins 2 groupes hydroxyles liés au silicium dans chaque molécule, un organohydrogénopolysiloxane ayant au moins deux atomes d'hydrogène liés au silicium dans chaque molécule et un catalyseur du type au platine, pour donner une dispersion dans laquelle ladite composition de caoutchouc de silicone liquide expansible est dispersée sous forme d'une phase discontinue, la concentration de la composition de caoutchouc de silicone liquide expansible dans la dispersion à base d'eau étant de 5 à 70 pour cent en poids, et par la mise en contact, ensuite, de cette dispersion avec un liquide se trouvant à une température plus élevée que celle de l'eau sus-mentionnée afin, simultanément, d'induire le durcissement et l'expansion de ladite composition de caoutchouc de silicone liquide expansible.

# FIG. 1

# FIG.2

# FIG.3(a)

# FIG.3(b)